# EUROPEAN PATENT SPECIFICATION

(11) **EP 3 375 830 B1**
(45) Date of publication and mention of the grant of the patent: **22.01.2020**
(21) Application number: 18160577.5
(22) Date of filing: 07.03.2018
(51) Int. Cl.: C09D 11/38, C09D 11/322

(54) **INK COMPOSITION**
TINTENZUSAMMENSETZUNG
COMPOSITION D'ENCRE

(30) Priority: 17.03.2017 JP 2017052569
(43) Date of publication of application: 19.09.2018
(73) Proprietor: Seiko Epson Corporation, Tokyo 160-8801 (JP)
(72) Inventor: NAKANO, Tomohito, Suwa-shi, Nagano 392-8502 (JP); MIZUTAKI, Yusuke, Suwa-shi, Nagano 392-8502 (JP); MORITA, Keisuke, Suwa-shi, Nagano 392-8502 (JP)
(74) Representative: Miller Sturt Kenyon

(56) References cited:
- EP-A1- 2 657 306
- US-A1- 2009 238 974
- US-A1- 2014 292 943
- US-A1- 2014 295 147

## Description

### BACKGROUND

### 1. Technical Field

The present invention relates to an ink composition.

### 2. Related Art

There has been known an ink jet recording method for recording images on a recording medium by ejecting very small ink droplets from a recording head of an ink jet recording apparatus. The inkjet recording method has come into use for recording images not only on recording media absorbent of ink, such as plain paper, but also on recording media poorly absorbent of ink (hereinafter referred to as poorly ink-absorbent media), such as art paper and coated paper, or recording media non-absorbent of ink (hereinafter referred to as ink-non-absorbent media), such as plastic films. Also, aqueous ink compositions containing water as the base thereof have come into use for ink jet recording apparatuses from the viewpoint of the global environment and safety.

Aqueous inks used in the ink jet recording method contain an alkanediol as a penetration agent so that the ink can be stably ejected and can form high-quality images. For example, JP-A-2015-199790 discloses an aqueous ink composition containing 1,2-hexanediol as a penetration agent. The use of 1,2-hexanediol as a penetration agent in an ink hinders the ink from adhering to the ejection face of the ink jet head, facilitates stable ejection of the ink, and helps the ink to form images having high quality and high fastness to rubbing.

Unfortunately, 1,2-hexanediol has a low normal boiling point and is hence a volatile organic compound (VOC). Accordingly, VOC emission from the recorded image may be increased. Using a penetration agent having a higher normal boiling point than 1,2-hexanediol may be a solution to reduce VOC emission. However, if an ink jet ink containing a penetration agent having a higher normal boiling point is simply used, VOC emission from the image can be reduced, whereas the ink is not stably ejected or the ink attached to the recording medium is not easily dried, causing the ink to bleed or reducing image quality with increased graininess.

### SUMMARY

An advantage of some aspects of the invention is that it provides an ink composition that can reduce VOC emission and achieve both high ejection stability and high image quality when used in the ink jet recording method.

The following embodiments of the invention solve at least part of the above-described issues.

According to an aspect of the invention, there is provided an ink composition containing 3-methyl-1,5-pentanediol, di(ethylene glycol) 2-ethylhexyl ether, and water, and having a 1,2-hexanediol content of 0.5% by mass or less. In the ink composition, the mass ratio of 3-methyl-1,5-pentanediol to di(ethylene glycol) 2-ethylhexyl ether is in the range of 13/1 to 67/1.

When an ink composition contains 3-methyl-1,5-pentanediol, di(ethylene glycol) 2-ethylhexyl ether, and water, and in which the mass ratio of 3-methyl-1,5-pentanediol to di(ethylene glycol) 2-ethylhexyl ether is in the range of 13/1 to 67/1, the ink composition can reduce VOC emission and achieve both high ejection stability and high image quality when used in an inkjet recording method, even though the 1,2-hexanediol content does not exceed 0.5% by mass.

In some cases, the 3-methyl-1,5-pentanediol content is in the range of 3% by mass to 15% by mass relative to the total mass of the ink composition.

When the 3-methyl-1,5-pentanediol content is in such a range, still higher ejection stability and higher image quality can be achieved.

In some cases, the di(ethylene glycol) 2-ethylhexyl ether content is in the range of 0.1% by mass to 0.5% by mass relative to the total mass of the ink composition.

When the di(ethylene glycol) 2-ethylhexyl ether content is in such a range, still higher ejection stability and higher image quality can be achieved, and, in addition, the ink composition can be stably stored.

Preferably, the ink composition does not contain an organic solvent having a normal boiling point of less than 250°C.

Since organic solvents having a normal boiling point of less than 250°C are not contained, VOC emission can be further reduced.

The ink composition may further contain a silicone surfactant.

The silicone surfactant in the ink composition enhances the ejection stability.

The ink composition may further contain glycerin.

Glycerin in the ink composition can reduce clogging of nozzles and ejection failure when the ink composition is ejected by an ink jet method.

The ink composition may further contain triethylene glycol.

Triethylene glycol in the ink composition can reduce clogging of nozzles and ejection failure when the ink composition is ejected by an ink jet method.

### DESCRIPTION OF EXEMPLARY EMBODIMENTS

Preferred embodiments of the invention will now be described. The following embodiments will be described by way of example and the features of separate embodiments may be combined. The invention is not limited to the disclosed embodiments, and various modifications may be made within the scope and spirit of the invention.

### 1. Ink Composition

The ink composition according to the present disclosure contains 3-methyl-1,5-pentanediol, di(ethylene glycol) 2-ethylhexyl ether, and water, and has a 1,2-hexanediol content of 0.5% by mass or less. Suitably the 1,2-hexanediol content is 0-0.5% by mass. In the ink composition, the mass ratio of 3-methyl-1,5-pentanediol to di(ethylene glycol) 2-ethylhexyl ether is in the range of 13/1 to 67/1. The ink composition of the present disclosure contains water and solvent including 3-methyl-1,5-pentanediol and di(ethylene glycol) 2-ethylhexyl ether. The ink composition may further contain further components, for example, a coloring material, resin components, and/or a surfactant. Such an ink composition can reduce VOC emission and achieve both high ejection stability and high image quality when used for recording by an ink jet recording method. The ingredients in the ink composition of some embodiments of the disclosure will now be described.

### 1. 1. 1. Coloring Material

The ink composition may contain a coloring material. The coloring material may be a dye or a pigment. Pigments are not easily discolored by light or gases and are therefore advantageous. Accordingly, images formed with an ink containing a pigment on recording media such as ink-non-absorbent or poorly ink-absorbent recording media are resistant to water, gases, light, and the like, exhibiting good storage stability.

Pigments that can be used as the color material include, but are not limited to, inorganic pigments and organic pigments. Exemplary inorganic pigments include titanium oxide, iron oxide, and carbon blacks produced by known methods, such as the contact method, the furnace method, and the thermal method. Exemplary organic pigments include azo pigments, such as azo lake, insoluble azo pigments, condensed azo pigments, and chelate azo pigments; polycyclic pigments, such as phthalocyanine pigments, perylene pigments, perinone pigments, anthraquinone pigments, and quinophthalone pigments; and nitro pigments, nitroso pigments, and aniline black.

Among those pigments, carbon blacks are used as a black pigment, and Examples thereof include, but are not limited to, C.I. Pigment Black 7, such as furnace black, lampblack, acetylene black, and channel black; and commercially available carbon blacks. Examples of commercially available carbon blacks include No. 2300, 900, MCF88, No. 20B, No. 33, No. 40, No. 45, No. 52, MA7, MA8, MA77, MA100, and No. 2200B (each produced by Mitsubishi Chemical); Color Blacks FWI, FW2, FW2V, FW18, FW200, S150, S160, and S170, Pritex 35, Pritex U, Pritex V, Pritex 140U, and Special Blacks 6, 5, 4A, 4, and 250 (each produced by Degussa); and Conductex SC, Raven 1255, Raven 5750, Raven 5250, Raven 5000, Raven 3500, Raven 1255, and Raven 700 (each produced by Carbon Columbia); and Regal 400R, Regal 330R, Regal 660R, Mogul L, Monarch 700, Monarch 800, Monarch 880, Monarch 900, Monarch 1000, Monarch 1100, Monarch 1300, Monarch 1400, and Elftex 12 (each produced by Cabot).

Exemplary white pigments include, but are not limited to, C.I. Pigment Whites 6, 18, and 21 and other inorganic white pigments, such as, titanium oxide, zinc oxide, zinc sulfide, antimony oxide, magnesium oxide, and zirconium oxide. Also, organic white pigments, apart from these inorganic white pigments, may be used, such as white hollow resin particles and polymer particles.

Pigments that can be used in a yellow ink include, but are not limited to, C.I. Pigment Yellows 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133,138,139, 147, 151, 153, 154, 167, 172, and 180.

Pigments that can be used in a magenta ink include, but are not limited to, C.I. Pigment Reds 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, and 245; and C.I. Pigment Violets 19, 23, 32, 33, 36, 38, 43, and 50.

Pigments that can be used in a cyan ink include, but are not limited to, C.I. Pigment Blues 1, 2, 3, 15, 15:1, 15:2, 15:3, 15:34, 15:4, 16, 18, 22, 25, 60, 65, and 66; and C.I. Vat Blues 4 and 60.

Pigments that can be used for color inks other than magenta, cyan, and yellow include, but are not limited to, C.I. Pigment Greens 7 and 10, C.I. Pigment Browns 3, 5, 25, and 26, and C.I. Pigment Oranges 1, 2, 5, 7, 13, 14, 15, 16, 24, 34, 36, 38, 40, 43, and 63.

Exemplary pearl pigments include, but are not limited to, pigments exhibiting pearly gloss or interference gloss, such as titanium dioxide-coated mica, fish scale foil, and bismuth trichloride.

Exemplary metal pigments include, but are not limited to, elemental metals, such as aluminum, silver, gold, platinum, nickel, chromium, tin, zinc, indium, titanium, and copper, and alloys thereof.

The coloring material content in the ink composition may be in the range of 1.5% by mass to 10% by mass and is preferably in the range of 2% by mass to 7% by mass, such as 3% by mass to 6% by mass, relative to the total mass of the ink composition.

For using a pigment in the ink composition, the pigment is held in water in a stably dispersed state. For this purpose, the pigment may be used in the form of dispersion in which the pigment is dispersed with a resin dispersant, such as a water-soluble resin and/or a water-dispersible resin (the pigment in this form is hereinafter referred to as resin-dispersed pigment dispersion), or in which the pigment is dispersed with a surfactant, such as a water-soluble or a water-dispersible surfactant (the pigment in this form is hereinafter referred to as surfactant-dispersed pigment dispersion). Alternatively, a hydrophilic functional group may be chemically or physically introduced to the surfaces of the pigment particles so that the pigment can be dispersed or dissolved in water without using a resin dispersant, a surfactant, or any other dispersant (the dispersion of this type of pigment is hereinafter referred to as surface-treated pigment dispersion). Any one of the resin-dispersed pigment dispersion, the surfactant-dispersed pigment dispersion, and the surface-treated pigment dispersion can be used for preparing the ink composition. These dispersions may be used in combination as needed.

Examples of the resin dispersant used in the resin-dispersed pigment dispersion include polyvinyl alcohols, polyvinylpyrrolidones, polyacrylic acid, acrylic acid-acrylonitrile copolymer, vinyl acetate-acrylic ester copolymer, acrylic acid-acrylic ester copolymer, styrene-acrylic acid copolymer, styrene-methacrylic acid copolymer, styrene-methacrylic acid-acrylic ester copolymer, styrene-α-methylstyrene-acrylic acid copolymer, styrene-α-methylstyrene-acrylic acid-acrylic ester copolymer, styrene-maleic acid copolymer, styrene-maleic anhydride copolymer, vinyl naphthalene-acrylic acid copolymer, vinyl naphthalene-maleic acid copolymer, vinyl acetate-maleic acid ester copolymer, vinyl acetate-crotonic acid copolymer, vinyl acetate-acrylic acid copolymer, and salts thereof. Among those preferred are copolymers of a monomer having a hydrophobic functional group and a monomer having a hydrophilic functional group, and polymers formed of a monomer having both a hydrophobic functional group and a hydrophilic functional group. If a copolymer is used, the copolymer may be a random copolymer, a block copolymer, an alternating copolymer, or a graft copolymer.

The above-mentioned salts used as the resin dispersant may be formed with a basic compound, such as ammonia, ethylamine, diethylamine, triethylamine, propylamine, isopropylamine, dipropylamine, butylamine, isobutylamine, diethanolamine, triethanolamine, triisopropanolamine, aminomethylpropanol, or morpholine. The amount of the basic compound added is not limited as long as it is equal to or more than the neutralization equivalent of the resin dispersant.

Preferably, the resin dispersant has a weight average molecular weight in the range of 1,000 to 100,000, more preferably in the range of 3,000 to 10,000. Use of a resin dispersant having a molecular weight in such a range allows the coloring material to be stably dispersed in water, and facilitates the control of viscosity of the resulting ink composition.

The resin dispersant is commercially available. Examples of the commercially available resin dispersant include JONCRYL® 67 (weight average molecular weight: 12,500, acid value: 213), JONCRYL® 678 (weight average molecular weight: 8,500, acid value: 215), JONCRYL® 586 (weight average molecular weight: 4,600, acid value: 108), JONCRYL® 611 (weight average molecular weight: 8,100, acid value: 53), JONCRYL® 680 (weight average molecular weight: 4,900, acid value: 215), JONCRYL® 682 (weight average molecular weight: 1,700, acid value: 238), JONCRYL® 683 (weight average molecular weight: 8,000, acid value: 160), and JONCRYL® 690 (weight average molecular weight: 16,500, acid value: 240), all of which are products of BASF Japan.

Examples of the surfactant used in the surfactant-dispersed pigment dispersion include anionic surfactants, such as alkane sulfonates, α-olefin sulfonates, alkylbenzene sulfonates, alkylnaphthalene sulfonates, acylmethyltaurinates, dialkyl sulfosuccinates, alkylsulfates, sulfated olefins, polyoxyethylene alkyl ether sulfates, alkylphosphates, polyoxyethylene alkyl ether phosphates, and monoglyceride phosphates; amphoteric surfactants, such as alkylpyridium salts, alkylamino salts, and alkyldimethylbetaine; and nonionic surfactants, such as polyoxyethylene alkyl ethers, polyoxyethylene alkylphenyl ethers, polyoxyethylene alkyl esters, polyoxyethylene alkyl amides, glycerol alkyl esters, and sorbitan alkyl esters.

Preferably, the proportion of the resin dispersant or the surfactant to the pigment is in the range of 1 part by mass to 100 parts by mass, more preferably in the range of 5 parts by mass to 50 parts by mass, relative to 100 parts by mass of the pigment. When the dispersant is used in such a proportion, the pigment can be stably dispersed in water.

Examples of the hydrophilic functional group introduced to the surface-treated pigment include -OM, -COOM, -CO-, -SO₃M, -SO₂NH₃, -RSO₃M, -PO₃HM, -PO₃M₃, - SO₃NHCOR, -NH₃, and -NR₃ (in the formulas, M represents a hydrogen atom, an alkali metal, ammonium, or an organic ammonium, and R represents an alkyl group having a carbon number of 1 to 12, a substituted or unsubstituted phenyl group, a substituted or unsubstituted pyridyl group or a substituted or unsubstituted naphthyl group). "Organic ammonium" refers to a group N⁺R'₃ where each R' is independently C₁₋₆ alkyl. Substituted phenyl, pyridyl and naphthyl groups are suitably substituted with one or more hydrophilic substituents such as OH, C(O)OH, NH₂, CN and SO₂H. These functional groups can be physically or chemically introduced by being grafted onto the surfaces of the pigment particles directly or with a multivalent group therebetween. The multivalent group may be an alkylene group having a carbon number of 1 to 12, a substituted or unsubstituted phenylene group, or a substituted or unsubstituted naphthylene group, where substituted phenylene and naphthylene groups are suitably substituted with one or more hydrophilic substituents such as OH, C(O)OH, NH₂, CN and SO₂H.

Preferably, the surfaces of the surface-treated pigment particles are such that they have been treated with an agent containing sulfur so that -SO₃M and/or -RSO₃M (M represents a counterion, such as hydrogen ion, an alkali metal ion, ammonium ion, or an organic ammonium ion) can be chemically bound to the surfaces of the pigment particles. More specifically, for preparing such a surface-treated pigment, a pigment is dispersed in a solvent that has no active proton and is nonreactive to sulfonic acid, and that does not dissolve or easily dissolve the pigment. Subsequently, the surfaces of the pigment particles are treated with amidosulfonic acid or a complex of sulfur trioxide and a tertiary amine so that -SO₃M and/or -RSO₃M can be chemically bound to the surfaces of the pigment particles. The surface-treated pigment may be thus prepared so as to be dispersible or soluble in water.

For grafting any of the above-cited functional groups or a salt thereof onto the surfaces of the pigment particles directly or with a multivalent group therebetween, various known methods can be applied. For example, a commercially available oxidized carbon black may further be oxidized with ozone or a sodium hypochlorite solution so that the surfaces of the carbon black become more hydrophilic, as disclosed in, for example, JP-A-7-258578, JP-A-8-3498, JP-A-10-120958, JP-A-10-195331, and JP-A-10-237349. A carbon black may be treated with 3-amino-N-alkyl-substituted pyridium bromide, as disclosed in, for example, JP-A-10-195360 and JP-A-10-330665. An organic pigment may be dispersed in a solvent not dissolving or not easily dissolving the organic pigment, and the sulfone group is introduced into the surfaces of the pigment particles with a sulfonating agent, as disclosed in, for example, JP-A-8-283596, JP-A-10-110110, and JP-A-10-110111. An organic pigment may be dispersed in a basic solvent that can form a complex with sulfur trioxide, and sulfur trioxide is added to the dispersion to introduce the sulfone group or sulfoneamino group to the surfaces of the organic pigment particles, as disclosed in, for example, JP-A-10-110114. Any technique can be applied for preparing the surface-treated pigment without being limited to the above methods.

One type or a plurality of types of functional group may be grafted onto the particles of the pigment. What type of functional group is grafted and how much the functional group is grafted can be appropriately selected in view of the stability of the pigment particles in the ink, the color density of the ink, and the ease of drying the ink at the front of the ink jet head.

For preparing a resin-dispersed pigment dispersion or a surfactant-dispersed pigment dispersion, a pigment, water, and a resin dispersant (for resin-dispersed pigment dispersion) or a surfactant (for surfactant-dispersed pigment dispersion) are fully mixed by using a known disperser, such as ball mill, sand mill, attritor, roll mill, agitator mill, Henschel mixer, colloid mill, ultrasonic homogenizer, jet mill or angmill. For preparing a surface-treated pigment dispersion, a surface-treated pigment and water are fully mixed by using any of the foregoing dispersers. In any case, a water-soluble organic solvent, a neutralizer, and any other additives may be optionally added. Beneficially, dispersion is continued until the particle size of the pigment is reduced to an average particle size in the range of 20 nm to 500 nm, preferably in the range of 50 nm to 200 nm, from the viewpoint of forming a stable dispersion of the pigment in water.

### 1. 1. 2. Resin Component

In an embodiment, the ink composition may contain a water-soluble and/or a water-insoluble resin component. The resin component solidifies the ink and firmly fixes the solidified ink to the recording medium. The resin component may be dissolved or dispersed in the ink composition. If the resin component is dissolved, the above-described resin dispersant used in the resin-dispersed pigment dispersion may be used. If the resin is in a dispersion, fine particles of a resin that is insoluble or poorly soluble in the liquid medium of the ink composition are dispersed in the liquid medium to form an emulsion or a suspension.

Examples of the resin component includes polyacrylic esters and copolymers thereof; polymethacrylic esters and copolymers thereof; polyacrylonitriles and copolymers thereof; polycyanoacrylate, polyacrylamide, polyacrylic acid, polymethacrylic acid, polyethylene, polypropylene, polybutene, polyisobutylene, polystyrene, and copolymers thereof; petroleum resin; chromane-indene resin; terpene resin; polyvinyl acetates and copolymers thereof; polyvinyl alcohol; polyvinyl acetal; polyvinyl ether; polyvinyl chlorides and copolymers thereof; polyvinylidene chloride; fluororesin; fluorine rubber; polyvinyl carbazole; polyvinyl pyrrolidones and copolymers thereof; polyvinyl pyridine; polyvinyl imidazole; polybutadienes and copolymers thereof; polychloroprene; polyisoprene; and natural resins, in addition to the above-cited resins used as the resin dispersant. Preferably, the molecule of the resin has a structure having both a hydrophobic site and a hydrophilic site.

The resin component may be used in a form of fine particles. In order to obtain fine particles of a resin component, any of the following methods can be applied. Some of the methods may be combined if necessary. A polymerization catalyst (polymerization initiator) and a dispersant may be mixed into a monomer that can form a desired resin component, and the mixture is subjected to polymerization (emulsion polymerization). A resin component having a hydrophilic site may be dissolved in a water-soluble organic solvent, and after mixing the solution with water, the water-soluble organic solvent is removed by evaporation. A resin component may be dissolved in a water-insoluble organic solvent, and the solution and a dispersant are mixed into water. Any of these methods can be appropriately selected according to the type and the properties of the resin component to be used. Examples of the dispersant used for dispersing the resin component include, but not limited to, anionic surfactants, such as sodium dodecylbenzenesulfonate, sodium lauryl phosphate, and polyoxyethylene alkyl ether ammonium sulfate; and nonionic surfactants, such as polyoxyethylene alkyl ether, polyoxyethylene alkyl ester, polyoxyethylene sorbitan fatty acid ester, and polyoxyethylene alkylphenyl ether. These dispersants may be used singly or in combination.

The resin component in the form of fine particles (in an emulsion or a suspension) may be prepared from known materials by a known method. For example, resin particles disclosed in JP-B-62-1426, JP-A-3-56573, JP-A-3-79678, JP-A-3-160068, or JP-A-4-18462 may be used. Commercially available resin emulsions or suspensions may be used, and examples thereof include Micro Gel E-1002 and Micro Gel E-5002 (each produced by Nippon Paint); VONCOAT® 4001 and VONCOAT® 5454 (each produced by DIC); Saivinol® SK-200 (produced by Saiden Chemical Industry); JONCRYL® 7100, JONCRYL® 390, JONCRYL® 711, JONCRYL® 511, JONCRYL® 7001, JONCRYL® 632, JONCRYL® 741, JONCRYL® 450, JONCRYL® 840, JONCRYL® 74J, JONCRYL® HRC-1645J, JONCRYL® 734, JONCRYL® 852, JONCRYL® 7600, JONCRYL® 775, JONCRYL® 537J, JONCRYL® 1535, JONCRYL® PDX-7630A, JONCRYL® 352J, JONCRYL® 352D, JONCRYL® PDX-7145, JONCRYL® 538J, JONCRYL® 7640, JONCRYL® 7641, JONCRYL® 631, JONCRYL® 790, JONCRYL® 780, and JONCRYL® 7610 (each produced by BASF); and DYNAFLOW series (produced by JSR).

If the resin component is used in the form of fine particles, the resin component may have an average particle size in the range of 5 nm to 400 nm, preferably in the range of 50 nm to 200 nm, from the viewpoint of ensuring a storage stability and an ejection stability of the ink composition. When the resin component has an average particle size in such a range, the ink composition can form a satisfactory coating film, and also clogging of nozzles can be reduced because such particles do not easily form aggregates. The term "average particle size" mentioned herein refers to volume average particle size, unless otherwise specified. The average particle size can be measured with a particle size distribution analyzer based on the dynamic light scattering theory. For example, a particle size distribution analyzer Microtrac UPA (manufactured by Nikkiso) may be used.

The resin component may have a glass transition temperature (Tg) in the range of - 20°C to 100°C, preferably in the range of -10°C to 80°C.

The resin component content on a solids basis may be in the range of 0.1% by mass to 15% by mass and is preferably in the range of 0.5% by mass to 10% by mass, more preferably in the range of 2% by mass to 7% by mass, still more preferably in the range of 3% by mas to 5% by mass, relative to the total mass of the ink composition. When the resin component content is such a range, the ink composition can be solidified and fixed even to ink-non-absorbent or poorly ink-absorbent recording media.

### 1. 1. 3. Organic Solvent

In some embodiments, the ink composition contains an organic solvent. The organic solvent facilitates stable ejection of the ink composition and helps the ink composition ejected onto the recording medium to dry satisfactorily and thus to form images having high fastness to rubbing.

Beneficially, the ink compositions contain a solvent having a normal boiling point of 250°C or more. In an embodiment, the content of an organic solvent having a normal boiling point of less than 250°C may be 0.5% by mass or less, for example 0-0.5%, and is preferably 0.4% by mass or less, for example 0-0.4%, still more preferably 0.2% by mass or less, for example 0-0.2%. Further preferably, the ink composition does not contain any organic solvent having such a normal boiling point. Consequently, VOC emission from the ink composition can be reduced.

The organic solvent used in the ink composition may be soluble in water. The water-soluble organic solvent further helps the ink composition ejected onto the recording medium to dry satisfactorily and thus to form images having high fastness to rubbing.

Example of the water-soluble organic solvent include, but are not limited to, 1,2-alkanediols and other polyhydric alcohols, pyrrolidone derivatives, and glycol ethers.

Exemplary 1,2-alkanediols include 1,2-propanediol, 1,2-butanediol, 1,2-pentanediol, 1,2-hexanediol, and 1,2-octanediol. These organic solvents may be used singly or in combination. 1,2-Alkanediols are advantageous in terms of increasing the wettability of the ink composition on the recording medium and in terms of helping the ink composition to penetrate the recording medium. In the ink, the content of 1,2-alkanediol having a normal boiling point of less than 250°C, such as 1,2-hexanediol, may be 0.5% by mass or less, e.g. 0-0.5%; and is preferably 0.4% by mass or less, e.g. 0-0.4%; still more preferably 0.2% by mass or less,e.g. 0-0.2%; from the viewpoint of reducing VOC emission from the resulting images. Further preferably, the ink composition does not contain such 1,2-alkanediols.

Examples of the polyhydric alcohols other than 1,2-alkanediols include ethylene glycol, diethylene glycol, triethylene glycol, propylene glycol, dipropylene glycol, 1,3-propanediol, 1,4-butanediol, 1,6-hexanediol, 2-ethy-1,3-hexanediol, 3-methyl-1,5-pentanediol, and glycerin. These organic solvents may be used singly or in combination. Among these, triethylene glycol and glycerin are advantageous in terms of reducing VOC emission from the resulting images. Polyhydric alcohols can hinder the ink from drying and solidifying at the nozzle surface of the ink jet head, thus preventing clogging of the nozzles and ejection failure.

The content of those polyhydric alcohols may be in the range of 1% by mass to 20% by mass and is preferably in the range of 3% by mass to 15% by mass, relative to the total mass of the ink composition. From the viewpoint of reducing VOC emission from the resulting images, the content of polyhydric alcohols having a normal boiling point of less than 250°C may be not more than 0.5% by mass or less, e.g. 0-0.5%, and is preferably 0.4% by mass or less, e.g. 0-0.4%. Further preferably, the ink composition does not contain such polyhydric alcohols.

Exemplary pyrrolidone derivatives include N-methyl-2-pyrrolidone, N-ethyl-2-pyrrolidone, N-vinyl-2-pyrrolidone, 2-pyrrolidone, N-butyl-2-pyrrolidone, and 5-methyl-2-pyrrolidone. These organic solvents may be used singly or in combination. Pyrrolidone derivatives, which serve as a dissolving agent favorable to resin components, help the ink composition to form recording particles having high fastness to rubbing and prevent the ink composition from clogging the nozzles of the ink jet head. If a pyrrolidone derivative is used, the content thereof may be in the range of 1% by mass to 20% by mass and is preferably in the range of 3% by mass to 15% by mass, relative to the total mass of the ink composition. From the viewpoint of reducing VOC emission from the resulting images, the content of pyrrolidone derivatives having a normal boiling point of less than 250°C may be not more than 0.5% by mass or less, e.g. 0-0.5%, and is preferably 0.4% by mass or less, e.g.0-0.4%. Further preferably, the ink composition does not contain such pyrrolidone derivatives.

Exemplary glycol ethers include hexyl glycol, 2-ethylhexyl glycol, ethylene glycol monoisobutyl ether, ethylene glycol monohexyl ether, ethylene glycol monoisohexyl ether, diethylene glycol monohexyl ether, triethylene glycol monohexyl ether, diethylene glycol monoisohexyl ether, triethylene glycol monoisohexyl ether, ethylene glycol monoisoheptyl ether, diethylene glycol monoisoheptyl ether, triethylene glycol monoisoheptyl ether, ethylene glycol monooctyl ether, ethylene glycol monoisooctyl ether, diethylene glycol monoisooctyl ether, triethylene glycol monoisooctyl ether, ethylene glycol mono-2-ethylhexyl ether, diethylene glycol mono-2-ethylhexyl ether, triethylene glycol mono-2-ethylhexyl ether, diethylene glycol mono-2-ethylpentyl ether, ethylene glycol mono-2-ethylpentyl ether, ethylene glycol mono-2-methylpentyl ether, diethylene glycol mono-2-methylpentyl ether, propylene glycol monobutyl ether, dipropylene glycol monobutyl ether, tripropylene glycol monobutyl ether, propylene glycol monopropyl ether, dipropylene glycol monopropyl ether, tripropylene glycol monomethyl ether, diethylene glycol monophenyl ether, and tetraethylene glycol monobutyl ether. These organic solvents may be used singly or in combination. Glycol ethers are advantageous for controlling the wettability of the ink composition on the recording medium.

The content of those glycol ethers may be in, but is not limited to, the range of 1% by mass to 20% by mass, preferably in the range of 3% by mass to 15% by mass, relative to the total mass of the ink composition. From the viewpoint of reducing VOC emission from the resulting images, the content of glycol ethers having a normal boiling point of less than 250°C may be not more than 0.5% by mass or less, e.g. 0-0.5%, and is preferably 0.4% by mass or less, e.g. 0-0.4%. Further preferably, the ink composition does not contain such glycol ethers.

The organic solvents contained in the ink composition of the present disclosure include 3-methyl-1,5-pentanediol (hereinafter referred to as MPD). The normal boiling point of MPD is 250°C and is higher than the normal boiling point (223°C) of 1,2-hexanediol (hereinafter referred to as 1,2-HD), which is conventionally used as an agent helping penetration into the recording medium. Therefore, by substituting MPD for 1,2-HD, VOC emission from the recorded images can be reduced.

Also, since MPD can easily penetrate and wet the recording medium and has a high normal boiling point, MPD can function as an agent moisturizing the inkjet head. However, MPD in the ink composition is likely to increase the dynamic surface tension of the ink composition and to reduce the ejection stability of the ink composition. Accordingly, the MPD content in the ink composition is controlled so that the mass ratio of 3-methyl-1,5-pentanedil to di(ethylene glycol) 2-ethylhexyl ether (described hereinafter) can be in the range of 13/1 to 67/1. Thus, both high ejection stability and improved image quality are achieved, and at the same time, VOC emission can be reduced.

The lower limit of the MPD content may be 3% by mass or more and is preferably 4% by mass or more, more preferably 5% by mass or more, relative to the total mass of the ink composition. The upper limit of the MPD content may be 15% by mass or less and is preferably 13% by mass or less, more preferably 10% by mass or less. Thus, the ink may contain MPD in an amount of 3 to 15%, 3 to 13%, 3 to 10%, 4 to 15%, 4 to 13%, 4 to 10%, 5 to 15%, 5 to 13% or 5 to 10% by mass, relative to the total mass of the ink composition. When the MPD content in the ink composition is in such a range, VOC emission can be reduced. In this instance, the dynamic surface tension of the ink composition is not excessively high. Accordingly, the ink composition spreads well and can be stably ejected in such a manner that droplets do not deviate largely from proper landing positions. Furthermore, the ink composition can form high-quality images having good graininess.

The organic solvents contained in the ink composition also include di(ethylene glycol) 2-ethylhexyl ether (hereinafter referred to as EHDG). Since EHDG has a normal boiling point of 272°C, use of EHDG in the ink composition results in reduced VOC emission from the recorded images.

By adding EHDG to the ink composition, the dynamic surface tension of the ink composition increased by the addition of MPD can be appropriately adjusted. By adjusting the dynamic surface tension of the ink composition, the ink composition does not much fill unintended areas and can be stably ejected in such a manner that droplets do not deviate largely from proper landing positions. Thus, by optimizing the mass ratio of MPD to EHDG in the ink composition, the ink composition can achieve both high image quality and high ejection and reduce VOC emission.

The mass ratio of MPD to EHDG (or MPD/EHDG mass ratio) in the ink composition is in the range of 13/1 to 67/1 and is preferably in the range of 20/1 to 60/1, more preferably in the range of 25/1 to 50/1. The ink composition containing MPD and EHDG with such proportions can ensure high ejection stability and form high-quality images while reducing VOC emission.

However, if the EHDG content is excessively high, part of EHDG is not dissolved in the ink composition and tends to reduce the stability in ejection and storage of the ink composition. Accordingly, the lower limit of the EHDG content is preferably 0.1% by mass or more, more preferably 0.15% by mass or more, still more preferably 0.2% by mass or more, relative to the total mass of the ink composition. The upper limit of the EHDG content is preferably 0.5% by mass or less, more preferably 0.45% by mass or less, still more preferably 0.4% by mass or less. Thus, the ink composition may contain EHDG in an amount of 0.1 to 0.5%, 0.1 to 0.45%, 0.1 to 0.4%, 0.15 to 0.5%, 0.15 to 0.45%, 0.15 to 0.4%, 0.2 to 0.5%, 0.2 to 0.45% or 0.2 to 0.4% by mass, relative to the total mass of the ink composition. The ink composition containing EHDG with such a content can be further stably ejected and form higher-quality images. In addition, the ink composition can be stably stored.

Organic solvents having a normal boiling point of 280°C or more can absorb water from the ink composition and thus increase the viscosity of the ink composition around the ink jet head, consequently reducing the ejection stability of the ink jet head. Accordingly, the upper limit of the organic solvents having a normal boiling point of 280°C or more in the ink composition is preferably 20% by mass or less, e.g.0-20%; more preferably 15% by mass or less, e.g. 0-15%; still more preferably 13% by mass or less, e.g. 0-13%. In this instance, the ink composition dries easily and rapidly on the recording medium, forming images that are unlikely to bleed. Also, the resulting recorded articles are less sticky and exhibit high fastness to rubbing. Exemplary organic solvents having a normal boiling point of 280°C or more include glycerin and triethylene glycol.

### 1. 1. 4. Water

The ink composition of the present disclosure contains water. The water is a dominant medium of the ink composition and is evaporated by drying. Preferably, the water is pure water or ultra-pure water from which ionic impurities have been removed as much as possible. Examples of such water include ion exchanged water, ultrafiltered water, reverse osmosis water, and distilled water. Preferably, sterile water prepared by, for example, UV irradiation or addition of hydrogen peroxide is used. The use of sterile water can reduce the occurrence of mold or bacteria in the pigment dispersion and the ink composition containing the pigment dispersion, thus being beneficial for long-time storage of the ink composition.

The water content may be 50% by mass or more and is preferably 60% by mass or more, more preferably 70% by mass or more, relative to the total mass of the ink composition.

### 1.1. 5. Surfactant

In an embodiment, the ink composition may contain a surfactant. Surfactants include, but are not limited to, acetylene glycol-based surfactants, fluorosurfactants, and silicone surfactants. It is beneficial that the ink composition contains at least one of these surfactants. Preferably, a silicone surfactant is used. The silicone surfactant in the ink composition further reduces the dynamic surface tension of the ink composition and further enhances ejection stability.

Exemplary acetylene glycol-based surfactants include, but are not limited to, SURFYNOL® series 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (each produced by Air Products and Chemicals); OLFINE® series B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (each produced by Nissin Chemical Industry); and ACETYLENOL® series E00, E00P, E40, and E100 (each produced by Kawaken Fine Chemicals).

The silicone surfactant used may be, but is not limited to, a polysiloxane-based compound. For example, a polyether-modified organosiloxane may be used as the polysiloxane-based compound. Polyether-modified organosiloxanes are commercially available, and examples thereof include BYK-306, BYK-307, BYK-333, BYK-341, BYK-345, BYK-346, and BYK-348 (each produced by BYK); and KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (each produced by Shin-Etsu Chemical).

The fluorosurfactant may be a fluorine-modified polymer, such as BYK-340 (produced by BYK).

If the ink composition contains a surfactant, the content thereof may be in the range of 0.1% by mass to 1.5% by mass, preferably in the range of 0.5% by mass to 1% by mass, relative to the total mass of the ink composition.

### 1. 1. 6. Other Constituents

The ink composition may optionally contain a pH adjuster, a polyolefin wax, a preservative or a fungicide, a rust preventive, a chelating agent, and other additives. These ingredients can improve the characteristics of the ink composition.

Examples of the pH adjuster include potassium dihydrogenphosphate, disodium hydrogenphosphate, sodium hydroxide, lithium hydroxide, potassium hydroxide, ammonia, diethanolamine, triethanolamine, triisopropanolamine, potassium carbonate, sodium carbonate, and sodium hydrogencarbonate.

The polyolefin wax may be produced from olefins, such as ethylene, propylene, or butylene, or an olefin derivative or an olefin copolymer, and examples of the polyolefin wax include polyethylene waxes, polypropylene waxes, and polybutylene waxes. Polyolefin waxes are commercially available, and examples thereof include NOPCOTE PEM 17 (produced by San Nopco), CHEMIPEARL™ W4005 (produced by Mitsui Chemicals), and AQUACER 515 and AQUACER 593 (each produced by BYK).

The polyolefin wax in the ink composition increases the lubricity of the image formed on an ink-non-absorbent or poorly ink-absorbent recording medium when the image comes into physical contact, and also increases the rub fastness of the image. The polyolefin wax content in the ink composition may be in the range of 0.01% by mass to 10% by mass and is preferably in the range of 0.05% by mass to 1% by mass, relative to the total mass of the ink composition. When the polyolefin wax content is in such a range, the above-mentioned advantageous effects can be satisfactorily produced.

Examples of the preservative or fungicide include sodium benzoate, sodium pentachlorophenol, sodium 2-pyridinethiol-1-oxide, sodium sorbate, sodium dehydroacetate, and 1,2-dibenzothiazoline-3-one. Commercially available preservatives or fungicides include Proxel™ XL2 and Proxel™ GXL (each produced by Avecia), and Denicide CSA and NS-500W (each produced by Nagase Chemtex).

Benzotriazole or the like may be used as a rust preventive.

Examples of the chelating agent include ethylenediaminetetraacetic acid and salts thereof, such as disodium dihydrogen ethylenediaminetetraacetate.

### 1. 1. 7. Preparation of Ink Composition

The ink composition of the present disclosure can be prepared by mixing the above-described ingredients in an arbitrary order and, optionally, removing impurities by, for example, filtration. For mixing the ingredients, for example, the ingredients may be added one after another into a container equipped with a stirring device, such as a mechanical stirrer or a magnetic stirrer, and the contents of the container are stirred. Filtration may be performed as required by, for example, centrifugal filtration or using a filter paper.

### 1. 1. 8. Physical Properties of Ink Composition

Beneficially, the ink composition of the present disclosure has a surface tension at 20°C in the range of 20 mN/m to 40 mN/m, preferably in the range of 20 mN/m to 35 mN/m, from the viewpoint of the balance between the quality of images and the reliability of the ink composition as an ink jet ink. The surface tension may be determined by measuring the ink composition wetting a platinum plate at 20°C with, for example, an automatic surface tensiometer CBVP-Z (manufactured by Kyowa Interface Science).

Also, from the same viewpoint as above, the ink composition may have a viscosity in the range of 3 mPa·s to 10 mPa·s, preferably in the range of 3 mPa·s to 8 mPa·s, at 20°C. The viscosity may be measured at 20°C with a viscoelasticity meter MCR-300 (manufactured by Pysica).

### 1. 1. 9. Uses

Since the ink composition of the present disclosure does not contain more than 0.5% by mass of 1,2-hexanediol, VOC emission from the ink composition during recording and from the recorded article is low. Also, when used in an inkjet recording method, the ink composition can be stably ejected and form high-quality images. Thus, the ink composition can be used for ink jet recording on various types of recording media.

Examples of the recording media include, but are not limited to, ink-absorbent cloth made of, for example, cotton, silk, polyester, polyurethane, or nylon; plain paper, ink jet paper, moderately absorbent fine quality paper, and copy paper; and poorly absorbent or non-absorbent coated paper or plastic films.

The poorly absorbent recording medium may be, but is not limited to, coated paper including a coating layer formed by applying a paint on the surface thereof. The coated paper may be, but is not limited to, book-printing paper, such as art paper, coat paper, or matte paper.

The non-absorbent recording medium may be, but is not limited to, a plastic film not provided with an ink-absorbing layer, or a paper sheet or any other base material coated with a plastic film. The plastic mentioned here may be polyvinyl chloride, polyethylene terephthalate, polycarbonate, polystyrene, polyurethane, polyethylene, or polypropylene. In the description herein, the ink-non-absorbent or poorly ink-absorbent recording medium may be simply referred to as a plastic medium.

The ink-non-absorbent and poorly ink-absorbent recording media used herein refer to recording media that can absorb water in an amount of 10 mL/m² or less for a period of 30 ms^{1/2} from the beginning of contact with water, measured by Bristow's method. The Bristow's method is broadly used as a method for measuring liquid absorption for a short time, and Japan Technical Association of the Pulp and Paper Industry (JAPAN TAPPI) has officially adopted this method. Details of this method are specified in Standard No. 51 of "JAPAN TAPPI Kami Pulp Shiken Hou 2000-nen Ban" (JAPAN TAPPI Pulp and Paper Test Methods, edited in 2000).

Recording on a recording medium by an ink jet recording method is performed in such a manner that the ink composition of an embodiment of the present disclosure is ejected onto the recording medium from a recording head of an ink jet recording apparatus.

The ink jet recording apparatus may be of, but is not limited to, drop-on-demand type. The drop-on-demand ink jet recording apparatus may employ a piezoelectric recording technique using piezoelectric elements disposed in a recording head, a thermal jet recording technique using heaters of heat resistors disposed in a recording head, or other techniques, and any of these recording techniques may be used. The ink composition of the present disclosure may be used in an ink jet recording method using an ink jet recording head having a nozzle surface subjected to, for example, ink-repellent treatment

The ink composition of the present disclosure can achieve both high ejection stability and high image quality and reduce VOC emission. Accordingly, VOC emission from the images recorded by using the ink composition is reduced. Also, the ink composition, which contains specific organic solvents, can stably ejected for recording and can form high quality images.

When the ink composition is used in an ink jet recording method, a reaction solution containing a polyvalent metal salt, a cationic compound, such as a cationic resin or a cationic surfactant, or an organic acid may be used as a flocculant for forming aggregates of one or more components of the ink composition. In this instance, the flocculant forms aggregates of the coloring material and resin in the ink composition. The aggregates hinder the coloring material from penetrating the recording medium, thus improving the image quality of recorded images.

### 2. EXAMPLES

The ink composition of the present disclosure will be further described in detail with reference to Examples and Comparative Examples. However, the invention is not limited to the disclosed Examples.

### 2. 1. Preparation of Ink Compositions

Ingredients for each ink were mixed with the proportions shown in the Table and stirred. The mixture was filtered through a membrane filter of 5 µm in pore size, and thus, inks of Examples 1 to 7 and Comparative Examples 1 to 10 were prepared. Each value in the Table represent the content (percent by mass) of the corresponding ingredient, and water was added so that the total of the ink composition came to 100% by mass.

**Table**

| | Boiling point (°C) | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|---|
| | | Cy | Cy | Cy | Cy | Cy | Cy | Y | Cy | Cy | Cy | Cy | Cy | Cy | Cy | Cy | Cy | Cy |
| Pigment | - | 5 | 5 | 5 | 5 | 5 | 5 | 5 | 5 | 5 | 5 | 5 | 5 | 5 | 5 | 5 | 5 | 5 |
| Glycerin | 290 | 10 | 10 | 10 | 10 | 10 | 10 | 10 | 10 | 10 | 10 | 10 | 10 | 10 | 10 | 10 | 10 | 10 |
| Triethylene glycol | 287 | 3 | 3 | 3 | 3 | 3 | 3 | 3 | 3 | 3 | 3 | 3 | 3 | 3 | 3 | 3 | 3 | 3 |
| MPD | 250 | 10 | 4 | 14 | 10 | 10 | 8 | 10 | 2 | 22 | 10 | 10 | 10 | 10 | 10 | - | 10 | 8 |
| EHD | 244 | - | - | - | - | - | - | - | - | - | - | - | - | - | - | 10 | - | - |
| EHDG | 272 | 0.3 | 0.3 | 0.3 | 0.15 | 0.4 | 0.3 | 0.3 | 0.3 | 0.3 | 0.05 | 0.8 | - | - | - | - | - | 0.3 |
| EHG | 229 | - | - | - | - | - | - | - | - | - | - | - | 0.8 | - | - | - | - | - |
| HeG | 208 | - | - | - | - | - | - | - | - | - | - | - | - | 0.8 | - | - | - | - |
| PhDG | 283 | - | - | - | - | - | - | - | - | - | - | - | - | - | 0.8 | 0.8 | - | - |
| TeraEGmBE | 304 | - | - | - | - | - | - | - | - | - | - | - | - | - | - | - | 0.8 | - |
| 1,2-HD | 223 | - | - | - | - | - | 0.5 | - | - | - | - | - | - | - | - | - | - | 1 |
| Silicone surfactant (BYK 348) | - | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | - |
| DYNAFLOW K201 | - | 4 | 4 | 4 | 4 | 4 | 4 | 4 | 4 | 4 | 4 | 4 | 4 | 4 | 4 | 4 | 4 | 4 |
| Water | - | Balance | Balance | Balance | Balance | Balance | Balance | Balance | Balance | Balance | Balance | Balance | Balance | Balance | Balance | Balance | Balance | Balance |
| MPD/EHDG ratio (quotient) | | 33.3 | 13.3 | 46.7 | 66.7 | 25 | 26.7 | 33.3 | 6.7 | 73.3 | 200 | 12.5 | - | - | - | - | - | 26.7 |
| VOC | | A | A | A | A | A | B | A | A | A | A | A | C | C | A | C | A | C |
| Graininess | | A | B | A | B | A | A | A | C | A | C | A | A | A | C | C | C | A |
| Ejection stability | | A | A | B | A | A | A | A | A | C | A | C | A | A | A | A | A | A |
| Storage stability | | A | A | A | A | B | A | A | A | A | A | C | A | A | A | A | A | A |

**The** ingredients used are as follows, the number of EO chains represents the number of ethylene oxide chains.

### Pigment:

- Pigment Blue 15:3 (Cyan (Cy) pigment)
- Pigment Yellow 74 (Yellow (Y) pigment)

### Penetration agent:

- MPD: 3-methyl-1,5-pentanediol (normal boiling point: 250°C)
- EHD: 2-ethyl-1,3-hexanediol (normal boiling point: 244°C)
- EHDG: di(ethylene glycol) 2-ethylhexyl ether (normal boiling point: 272°C)
- HeDG: diethylene glycol monohexyl ether (normal boiling point: 259°C)
- EHG: 2-ethylhexyl glycol (normal boiling point: 229°C)
- HeG: hexyl glycol (normal boiling point: 208°C)
- PhDG: phenyl diglycol (diethylene glycol monophenyl ether, normal boiling point: 283°C)
- TetraEGmBE: tetraethylene glycol monobutyl ether (normal boiling point: 304°C)
- 1,2-HD: 1,2-hexanediol (normal boiling point: 223°C)

### Surfactant:

- BYK 348 (silicone surfactant, produced by BYK)

### Resin:

- DYNAFLOW K201 (sulfonated isoprene resin, produced by JSR)

### 2. 2. Evaluation

### 2. 2. 1. VOC Emission

Each of the inks of Examples and Comparative Examples was subjected to an examination in accordance with Japan Environment Association Eco Mark, Product Category No. 155 Certification criteria "Imaging Equipment Such As Copiers, Printers, etc. Version 1. 2", using an ink jet printer, Model SC-T7250 (manufactured by Seiko Epson). For this examination, ink sets including cyan, magenta, yellow and black inks were prepared for each of the Examples and the Comparative Examples. The inks of each ink set contained the same constituents with the same proportions, except for the pigment. The pigment was changed according to the color.

### Criteria:

A: VOC emission was less than 18 mg/h.
B: VOC emission was in the range of 18 mg/h to less than 55 mg/h.
C: VOC emission was 55 mg/h or more.

### 2. 2. 2. Graininess

Each of the inks of Examples and Comparative Examples was subjected to printing test at a duty of 30% or 50% on an ink jet recording medium (photo paper "Gloss", product code: KA450PSK (manufactured by Seiko Epson), 60° gloss: 41) with an ink jet printer EP-803A (manufactured by Seiko Epson).

### Criteria:

A: Images printed at a duty of 30% did not have a grainy texture.
B: While images printed at a duty of 30% had a grainy texture, images printed at a duty of 50% did not have a grainy texture.
C: Images printed at a duty of 50% had a grainy texture.

### 2. 2. 3. Ejection Stability

Each of the inks of the Examples and the Comparative Examples was introduced into the cartridge of an ink jet printer Model PX-B700 (manufactured by Seiko Epson). After ensuring that the ink was ejected through nozzles communicating with the cartridge, a test pattern was continuously printed on 30 A4 paper sheets. After the completion of printing of 30 sheets, a nozzle check pattern was printed for checking failure of ejection through nozzles. The results were rated according to the following criteria:
A: No nozzles failed ejection.
B: 5 or less nozzles failed ejection and were then recovered by cleaning once.
C: 10 or less nozzles failed ejection and were then recovered by cleaning twice.

### 2. 2. 4. Storage Stability

Each ink of the Examples and the Comparative Examples was placed in a sample bottle, and the bottle was completely sealed. After the sample bottles were stored at 70°C for one day, the inks were visually checked for phase separation and rated according to the following criteria:
A: Phase separation did not occur.
B: Phase separation did not occur at room temperature, but ink was separated into two or more phases at 70°C.
C: Phase separation occurred at room temperature.

### 2. 3. Test Results

Test results are shown in the Table. As shown in the Table, all the inks of the Examples exhibited low VOC emission and were evaluated to be good in graininess and ejection stability. In particular, the inks of Examples 1 to 5 and 7, which did not contain 1,2-HD or organic solvent having a normal boiling point of less than 250°C, exhibited low VOC emission and were evaluated to be good. On the other hand, the cases where the ink did not contain MPD or EHDG (Comparative Examples 5 to 9) and the cases where the MPD/EHDG ratio was lower than 13/1 or higher than 67/1 (Comparative Examples 1 to 4) did not achieve both high ejection stability and high image quality while reducing VOC emission. Comparative Example 10, in which the ink contained more than 0.5% by mass of 1,2-HD, achieved both high ejection stability and high image quality, but exhibited high VOC emission.

The results of Example 3 and Comparative Example 2 suggest that a high MPD content results in slightly reduced ejection stability. The results of Comparative Examples 1 and 8 suggest that an excessively low MPD content causes images to have grainy texture and results in degraded image quality. The results of Example 4 and Comparative Example 3 suggest that a low EHDG content also results in degraded image quality, while the results of Example 5 and Comparative Example 4 suggest that a high EHDG content results in reduced storage stability. Furthermore, the results of Comparative Examples 5, 6, 8, and 10 suggest that inks containing an organic solvent having a normal boiling point of less than 250°C exhibit high VOC emission.

As is clear from those results, an ink composition containing 3-methyl-1,5-pentanediol, di(ethylene glycol) 2-ethylhexyl ether with a mass ratio (of 3-methyl-1,5-pentanediol to di(ethylene glycol) 2-ethylhexyl ether) in the range of 13/1 to 67/1 can reduce VOC emission and achieve both high ejection stability and high image quality when used in the inkjet recording method, even though the 1,2-hexanediol content is not more than 0.5% by mass.

The invention is not limited to the above-described embodiments and Examples, and various modifications may be made. For example, the invention includes substantially the same form as the disclosed embodiments (for example, a form including the same function and method and producing the same result, or a form having the same purpose and producing the same effect). Some elements unessential to the form of the disclosed embodiment may be replaced. The form of an embodiment of the invention includes an element producing the same effect or achieving the same object, as the form of the disclosed embodiments. The forms of the disclosed embodiments may be combined with the known art.

## Claims

1. An ink composition comprising:
3-methyl-1,5-pentanediol;
di(ethylene glycol) 2-ethylhexyl ether; and
water, and
having a 1,2-hexanediol content of 0.5% by mass or less,
wherein the mass ratio of 3-methyl-1,5-pentanediol to di(ethylene glycol) 2-ethylhexyl ether is in the range of 13/1 to 67/1.

2. The ink composition according to Claim 1, wherein the 3-methyl-1,5-pentanediol content is in the range of 3% by mass to 15% by mass relative to the total mass of the ink composition.

3. The ink composition according to Claim 1, wherein the di(ethylene glycol) 2-ethylhexyl ether content is in the range of 0.1% by mass to 0.5% by mass relative to the total mass of the ink composition.

4. The ink composition according to Claim 1, wherein the ink composition contains no organic solvent having a normal boiling point of less than 250°C.

5. The ink composition according to Claim 1, further comprising a silicone surfactant.

6. The ink composition according to Claim 1, further comprising glycerin.

7. The ink composition according to Claim 1, further comprising triethylene glycol.

## Patentansprüche

1. Tintenzusammensetzung, umfassend:
3-Methyl-1,5-pentandiol;
Di(ethylenglycol)2-ethylhexylether; und
Wasser, und
die einen 1,2-Hexandiolgehalt von 0,5 Masseprozent oder weniger aufweist,
wobei das Masseverhältnis von 3-Methyl-1,5-pentandiol zu Di(ethylenglycol)2-ethylhexylether im Bereich von 3/1 bis 67/1 ist.

2. Tintenzusammensetzung nach Anspruch 1, wobei der 3-Methyl-1,5-pentandiolgehalt im Bereich von 3 Masseprozent bis 15 Masseprozent relativ zur Gesamtmasse der Tintenzusammensetzung ist.

3. Tintenzusammensetzung nach Anspruch 1, wobei der Di(ethylenglycol)2-ethylhexylethergehalt im Bereich von 0,1 Masseprozent bis 0,5 Masseprozent relativ zur Gesamtmasse der Tintenzusammensetzung ist.

4. Tintenzusammensetzung nach Anspruch 1, wobei die Tintenzusammensetzung kein organisches Lösemittel mit einem normalen Siedepunkt kleiner als 250°C beinhaltet.

5. Tintenzusammensetzung nach Anspruch 1, ferner umfassend ein Silikontensid.

6. Tintenzusammensetzung nach Anspruch 1, ferner umfassend Glycerin.

7. Tintenzusammensetzung nach Anspruch 1, ferner umfassend Triethylenglycol.

## Revendications

1. Composition d'encre comprenant :
du 3-méthyl-1,5-pentanediol ;
du di(éthylène glycol)2-éthylhexyl éther ; et
de l'eau, et
ayant une teneur en 1,2-hexanediol de 0,5% en masse ou moins,
dans laquelle le rapport massique entre le 3-méthyl-1,5-pentanediol et le di(éthylène glycol)2-éthylhexyl éther est dans la plage de 13/1 à 67/1.

2. Composition d'encre selon la revendication 1, dans laquelle la teneur en 3-méthyl-1,5-pentanediol est dans la plage de 3% en masse à 15% en masse par rapport à la masse totale de la composition d'encre.

3. Composition d'encre selon la revendication 1, dans laquelle la teneur en di(éthylène glycol)2-éthylhexyl éther est dans la plage de 0,1% en masse à 0,5% en masse par rapport à la masse totale de la composition d'encre.

4. Composition d'encre selon la revendication 1, dans laquelle la composition d'encre ne contient aucun solvant organique ayant un point d'ébullition normal inférieur à 250°C.

5. Composition d'encre selon la revendication 1, comprenant en outre un tensioactif siliconé.

6. Composition d'encre selon la revendication 1, comprenant en outre de la glycérine.

7. Composition d'encre selon la revendication 1, comprenant en outre du triéthylène glycol.
